Europäisches Patentamt

**European Patent Office**

Office européen des brevets

(19)

(11). Numéro de publication: **0 003 713**
**B1**

(12) **FASCICULE DE BREVET EUROPEEN**

(45) Date de publication du fascicule du brevet: **27.10.82**

(51) Int. Cl.³: **C 01 F 7/30, B 01 J 8/24**

(21) Numéro de dépôt: **79420009.7**

(22) Date de dépôt: **06.02.79**

(54) **Procédé de décomposition thermique du chlorure d'aluminium hexahydraté par chauffage indirect.**

(30) Priorité: **13.02.78 DE 2805906**

(43) Date de publication de la demande:
**22.08.79 Bulletin 79/17**

(45) Mention de la délivrance du brevet:
**27.10.82 Bulletin 82/43**

(84) Etats contractants désignés:
**GB NL SE**

(56) Documents cités:
AT - B - 315 207
DE - A - 1 667 195
DE - A - 1 767 628
DE - A - 2 261 083
DE - A - 2 629 866
FR - A - 2 313 120
FR - A - 2 313 317
FR - A - 2 362 081
FR - A - 2 362 082

(73) Titulaire: **ALUMINIUM PECHINEY**
**28, rue de Bonnel**
**F-69433 Lyon Cedex 3 (FR)**

(72) Inventeur: **Reh, Lothar**
**Pommernstrasse 3**
**D-6000 Bergen-Enkheim (DE)**
Inventeur: **Plass, Ludolf**
**Parkstrasse 11**
**D-6242 Kronberg (DE)**
Inventeur: **Marchessaux, Philippe**
**Chemin des Trois Moulins**
**F-13100 Aix en Provence (FR)**
Inventeur: **Sood, Raman**
**Rural Route Number 8**
**Kingston Ontario K7L 4V4 (CA)**

(74) Mandataire: **Gaucherand, Michel et al,**
**PECHINEY UGINE KUHLMANN 28 rue de Bonnel**
**F-69433 Lyon Cedex 3 (FR)**

Courier Press, Leamington Spa, England.

# Procédé de décomposition thermique du chlorure d'aluminium hexahydraté et par chauffage indirect

La présente invention concerne un procédé de décomposition thermique de chlorure d'aluminium hydraté en alumine, en utilisant un état fluidisé à lit fluidisé fortement expansé d'un réacteur appelé "zone turbulente" auquel sont associés un gradient de concentration en matière solide de bas en haut du lit fluidisé et une évacuation des produits solides en même temps que les gaz à la partie supérieure de la zone turbulente, procédé dans lequel:

— le chlorure d'aluminium hydraté est mis en contact avec des gaz chauds dans le but d'obtenir une décomposition au moins partielle, avant d'être introduit dans la "zone turbulente", puis est conduit à la "zone turbulente".
— les produits solides évacués avec les gaz à la partie supérieure de la "zone turbulente" sont séparés et introduits dans une "zone de séjour" fluidisée avec une vitesse de gaz faible, zone à partir de laquelle un flux partiel de produits solides est renvoyé de façon contrôlée dans la "zone turbulente", afin de régler la densité de la suspension à l'intérieur de celle-ci à une valeur déterminée, et où un autre flux partiel est envoyé, au bout d'un temps de séjour suffisamment long, vers un refroidissement en lit fluidisé qui fonctionne avec un gaz contenant de l'oxygène comme gaz de fluidisation.
— au moins une partie du gaz de fluidisation chauffé, qui sort du refroidissement en lit fluidisé, est introduite comme gaz secondaire dans la "zone turbulente" au-dessus de l'alimentation en gaz principal de fluidisation.
— le chauffage de la "zone turbulente" est réalisé par apport de combustible dans la région comprise entre l'alimentation en gaz principal de fluidisation et l'alimentation en gaz secondaire.

Pour réaliser la décomposition thermique du chlorure d'aluminium hexahydraté, on connaît un procédé dit "à lit fluidisé" classique; dans un tel procédé, il existe une phase dense souvent appelée "lit fluidisé" et au-dessus une phase de densité beaucoup plus faible constituée de gaz et de poussière en suspension diluée dans ce gaz; la densité varie brusquement à la limite de ces deux phases (demandes de brevets allemands 1.667.195 et 2.261.083). On connaît aussi un procédé dans lequel existe un état fluidisé fortement expansé (demande de brevet allemand 1.767.628); dans ce procédé, un état de fluidisation sans couche à la limite supérieure définie, est maintenu en employant un vitesse de gaz nettement plus élevée que pour maintenir un lit fluidisé classique; le produit solide serait rapidement entraîné par le gaz, hors du réacteur, si l'on n'alimentait pas constamment et si l'on ne recyclait pas constamment du produit.

La concentration en produit solide est plus faible que dans un lit, mais nettement plus élevée que dans l'espace qui surmonte ce lit. Il n'existe pas de saut brusque entre la densité d'une phase dense et celle d'une phase légère au-dessus de cette phase dense, mais à l'intérieure du réacteur, la concentration en matière solide diminue progressivement du bas vers le haut.

Avec le procédé de la demande de brevet allemand 1.767.628, on parvient, en particulier, à une récupération très poussée de la chaleur contenue dans les gaz qui s'échappent et dans la matière solide extraite; il est donc possible d'obtenir une utilisation maximale du combustible, c'est-à-dire un rendement calorifique optimum. La combustion en deux étapes, à savoir d'abord incomplète avec uniquement le gaz de fluidisation dans la région des densités élevées, ensuite en présence de gaz secondaire en quantité égale ou légèrement supérieure à la quantité correspondante à une combustion complète, exclut des surchauffes locales de la masse fluidisée. On peut obtenir une température très constante et la régler avec précision.

Malgré ses grands avantages, ce procédé connu présente un inconvénient lors de son emploi pour la décomposition du chlorure d'aluminium hexahydraté.

Pour des raisons techniques liées à la réaction, par exemple à cause des changements de phase ou lorsque l'on recherche une grande pureté de l'alumine produite, il est nécessaire que le temps de séjour minimum de l'oxyde d'aluminium dans le système réactionnel soit élevé. Certes, dans ce procédé connu, on peut obtenir ce résultat en augmentant la hauteur du four de traitement, mais on augmente aussi la perte de charge à travers le milieu fluidisé et, du même fait, le consommation d'énergie.

Suivant un autre procédé connu (DT, OS 25 24 541), on évite cet inconvénient en introduisant les matières solides, séparées du gaz, dans un récepteur "à temps de séjour", à lit fluidisé, avec une vitesse de gaz faible, en recyclant de manière contrôlée, dans un four à lit fluidisé turbulent, une partie des matières solides afin d'obtenir une densité de suspension déterminée, et on introduit, dans un refroidisseur à lit fluidisé, l'autre partie des matières solides après un temps de séjour suffisamment long. La mise en oeuvre du procédé s'effectue donc dans un système essentiellement constitué par un réacteur à lit fluidisé et un réacteur "à temps de séjour", en adaptant les différentes phases de toute la réaction aux deux réacteurs, conformément aux exigences techniques.

Le chauffage des particules, qui, dans le processus de décomposition, consomme la majeure partie des besoins en calories, s'effectue dans le réacteur à lit fluidisé turbulent (réaction principale). L'obtention du produit dans sa qualité définitive, qui exige, par rapport à la réaction principale, une durée de réaction relativement plus longue (post-réaction), par exemple en raison de changements de phase ou de processus de diffusion et qui ne nécessite plus qu'un faible apport de chaleur, s'effectue alors dans le réacteur "à temps de séjour".

Ce procédé, assez ancien, a pour seul inconvénient qu'en raison des besoins en énergie, en combustible et en gaz contenant de l'oxygène, il y a production d'un gaz dont la concentration en HCl est faible et rend donc nécessaire des installations d'absorption qui comportent des appareils onéreux consommant des quantités importantes d'agent de réfrigération pour éliminer la chaleur de ce gaz.

En comparaison avec l'état de la technique, tel que connu par la demande de brevet allemand 1.767.628, il s'ajoute à cet inconvénient que, lors de la calcination en alumine, et en raison du temps de séjour prolongé, la dépense d'énergie est importante du fait du recyclage des matières solides.

Le but de la présente invention est de proposer un procédé qui évite les inconvénients précités, et qui permet d'obtenir, avec la production d'une alumine de haute qualité, un gaz ayant une teneur en HCl relativement élevée.

Ce but est atteint, suivant la présente invention, en mettant la chlorure d'aluminium hydraté et humide en contact avec des gaz à l'état turbulent et avec apport d'alumine calcinée chaude provenant de l'étage de calcination et ainsi, on le décompose au moins partiellement.

Il est certes connu, d'après le OE.PS 315.207, en vue de fabriquer du gaz chlorhydrique de concentration élevée par calcination de chlorures métalliques susceptibles de se décomposer thermiquement, de procéder à un mélange avec des produits solides porteurs de calories, préalablement chauffés, qui peuvent être constitués du produit calciné lui-même.

Cet état de la technique n'a, cependant, pas pu constituer une incitation à procéder de la manière conforme à l'invention, car on pouvait supposer que, dans le cas de la décomposition dans le lit fluidisé, compte tenu des températures relativement faibles qui règnent dans celui-ci, il se produirait une forte adhérence entre le chlorure d'aluminium hydraté introduit et le produit calciné. La conséquence en aurait été que le flux de matériau introduit sous une forme compacte ne se désagrégerait pas et que l'on ne pourrait pas créer un état de lit fluidisé convenable, ou bien que le mouvement turbulent convenable, initialement établi, disparaîtrait peu de temps après l'introduction du chlorure d'aluminium hydraté. L'hypothèse décrite précédemment ne pouvait pas non plus être écartée en raison du mode de fonctionnement décrit dans le DT—OS 25 24 541, dans lequel le chlorure d'aluminium hydraté est chargé dans des échangeurs de chaleur à suspension dans des gaz, car il règne dans ceux-ci, du fait de la vitesse et de la température élevées des gaz à l'endroit où s'effectue l'introduction du chlorure d'aluminium hydraté, des conditions de fonctionnement tout à fait différentes. De plus, dans ce cas, le chlorure d'aluminium hydraté est mis en contact essentiellement avec un flux de gaz pur et non avec un troisième partenaire de la réaction, le produit calciné chaud.

Le procédé selon l'invention peut être réalisé en une seule étape de manière à ce que l'énergie thermique indispensable à la décomposition soit pratiquement exclusivement fournie par le produit calciné chaud. Il est, toutefois, possible d'effectuer la décomposition en deux étapes, auquel cas il est plus rationnel que l'apport de chaleur se fasse, dans la première étape, par l'intermédiaire de surfaces chauffées et, dans la deuxième étape, par apport de produit calciné.

Selon une première forme d'exécution, lorsque le procédé selon l'invention pratique la décomposition thermique du chlorure d'aluminium hexahydraté en une seule étape, il utilise un état fluidisé à lit fluidisé fortement expansé d'un réacteur appelé "zone turbulente" auquel sont associés un gradient de concentration en matière solide de bas en haut du lit fluidisé et une évacuation des produits solides en même temps que les gaz à la partie supérieure de la "zone turbulente". Dans ce procédé:

— le chlorure d'aluminium hydraté est au moins partiellement décomposé par mise en contact avec des gaz chauds avant d'être introduit dans la "zone turbulente", puis est conduit dans ladite "zone turbulente",

— les produits solides évacués avec les gaz à la partie supérieure de la "zone turbulente" sont séparés et introduits dans une "zone de séjour" fluidisée avec une vitesse de gaz inférieure à celle des gaz de la "zone turbulente", "zone de séjour" à partir de laquelle un flux partiel de produits solides est renvoyé de façon contrôlée dans la "zone turbulente" et où un autre flux partiel est envoyé, au bout d'un temps de séjour compris entre 2 fois et 20 fois le temps de séjour à l'intérieur de la "zone turbulente" vers un refroidissement en lit fluidisé qui fonctionne avec un gaz contenant de l'oxygène comme gaz de fluidisation,

— au moins une partie du gaz de fluidisation chauffé qui sort du refroidissement en lit fluidisé est introduit comme gaz secondaire dans la "zone turbulente" au-dessus de l'alimentation en gaz principal de fluidisation,

— le chauffage de la "zone turbulente" est réalisé par apport de combustible dans la région comprise entre l'alimentation en gaz principal de fluidisation et l'alimentation en gaz secondaire.

Ce procédé est caractérisé en ce que, avant d'être introduit dans la "zone turbulente", $AlCl_3,6H_2O$ humide est décomposé au moins à 70%, en une seule étape par mise en contact, dans un lit fluidisé classique ou dans un lit fluidisé expansé à recirculation, simultanément avec des gaz à l'état turbulent et avec le produit calciné chaud provenant directement de la "zone turbulente".

Selon une deuxième forme d'exécution, lorsque le procédé selon l'invention pratique la décomposition thermique du chlorure d'aluminium hexahydraté en deux étapes, il se caractérise en ce que, avant d'être introduit dans la "zone turbulente", $AlCl_3,6H_2O$ humide est décomposé au moins à 70% selon les deux étapes, par une mise en contact dans la première étape avec des gaz à l'état turbulent dans un lit fluidisé à recirculation, l'apport de chaleur se faisant par des surfaces chauffantes, puis dans la deuxième étape par mise en contact avec des gaz dans un lit fluidisé classique avec apport de chaleur par l'intermédiaire du produit calciné provenant directement de la "zone turbulente".

L'avantage de la seconde forme d'exécution réside dans le fait que l'on apporte une proportion importante de l'énergie de décomposition et d'évaporation au moyen de fluides caloporteurs servant à chauffer les surfaces de chauffe et que l'on peut maintenir à un niveau plus faible la quantité de produit calciné recyclé. Par rapport au cas où l'on utilise exclusivement des surfaces chauffantes pour apporter la chaleur indispensable, l'avantage du mode de fonctionnement à deux étapes réside dans le fait que l'on peut obtenir, dans l'étape de décomposition, des températures plus élevées que celles que l'on peut obtenir de façon usuelle en utilisant les seules surfaces chauffantes.

La quantité de produit calciné indispensable au processus de décomposition s'obtient, d'une part, à partir de l'énergie thermique offerte par l'unité de masse du produit calciné, et, d'autre part, à partir de la quantité d'énergie nécessaire, laquelle est constituée de l'énergie de décomposition et de l'énergie d'évaporation, ainsi que de l'accroissement de la chaleur sensible, et peut se calculer de façon simple. Dans la forme de l'invention avec décomposition en deux étapes, il va de soi que l'énergie thermique apportée par les surfaces chauffantes vient en déduction.

Dans les deux formes d'exécution, c'est-à-dire dans le cas de la décomposition en une seule étape ou dans celui de la décomposition en deux étapes, l'état turbulent, au sein duquel intervient la séparation du gaz chlorhydrique, peut correspondre à celui d'un lit fluidisé classique, de préférence avec une densité de suspension moyenne comprise entre 300 et 600 $kg/m^3$ et une vitesse de gaz en mouvement turbulent inférieure à 0,8 m/s, ou encore à celui d'un lit fluidisé expansé avec recyclage du produit solide (lit fluidisé à recirculation), de préférence avec une densité de suspension moyenne comprise entre 40 et 250 $kg/m^3$ et une vitesse de gaz en mouvement turbulent comprise entre 1,5 et 5 m/s.

En ce qui concerne la décomposition en deux étapes avec apport de chaleur grâce à des surfaces chauffantes, un avantage de l'utilisation d'un lit fluidisé classique réside dans les coefficients de transfert de chaleur élevés, dûs à la densité élevée de la suspension. Mais, en raison de la faible intensité du mouvement turbulent, il peut se produire des phénomènes de bullage qui conduisent à une défluidisation locale. Lorsqu'on utilise un lit fluidisé expansé avec recirculation du produit solide, on évite avec certitude les phénomènes de bullage. Enfin, l'inconvénient des coefficients de transfert de chaleur plus faibles est compensé, dans une large mesure, par la possibilité d'une vitesse de circulation élevée.

La vitesse précitée du gaz de fluidisation est déterminée à partir de la vitesse effective du gaz chlorhydrique provenant de la décomposition par chauffage indirect. Ce gaz est essentiellement constitué par le mélange

a) du gaz de fluidisation utilisé

b) de la vapeur d'eau résultant de la vaporisation de l'humidité introduite et de l'eau de constitution et

c) de l'acide chlorhydrique qui se forme par la décomposition du chlorure d'aluminium et par la vaporisation dudit acide.

La vitesse du gaz est celle qu'il a dans le réacteur de décomposition supposé vide.

Pour entretenir le ou les lits fluidisés, on peut utiliser des gaz externes qui sont éventuellement préchauffés, en faibles quantités, de préférence constitués de vapeur d'eau.

Dans la mesure où l'on prévoit une décomposition en deux étapes, il est plus rationnel que le chauffage indirect dans la première étape de décomposition s'effectue par l'intermédiaire de surfaces chauffantes placées dans le réacteur, surfaces qui sont alimentées par des liquides caloporteurs, tels que des sels fondus ou des huiles. Le chauffage des caloporteurs peut être réalisé à l'aide de brûleurs traditionnels. Mais on peut aussi utiliser la chaleur contenue dans le produit calciné lui-même. Pour effectuer le transfert de chaleur, il est particulièrement avantageux d'utiliser des faisceaux tubulaires. Si l'on utilise un lit fluidisé classique, c'est-à-dire sans recirculation, il est recommandé d'effectuer le montage des parois tubulaires de manière à ce qu'il en résulte une disposition horizontale des tuyaux et, si l'on utilise un lit fluidisé en recirculation, il est recommandé d'effectuer ce montage de manière à ce qu'il en résulte, pour réduire l'érosion, une disposition verticale des tuyaux. Les débits de fluide caloporteur, de gaz de fluidisation, le cas échéant de gaz secondaire, la quantité de chlorure d'aluminium hexa-hydraté, et, éventuellement, son débit de recyclage, doivent être réglés de manière que la température du lit fluidisé de la première étape soit de préférence comprise entre 150°C. et 300°C.

Le temps de séjour du produit fluidisé est choisi d'une manière telle qu'environ 70 à 95% du chlorure soient décomposés.

Dans la seconde étape de décomposition, qui fonctionne avec introduction de produit calcine, dans un lit fluidise classique les températures de décomposition doivent être plus élevées telles que, par exemple, 600°C. pour que la quantité de gaz chlorhydrique introduite avec le produit solide dans l'étape de calcination soit aussi faible que possible.

Dans le cas où l'on utilise une décomposition en une seule étape qui se réalise uniquement avec introduction de produit calciné, la température de décomposition doit être réglée de manière qu'elle soit comprise entre 200 et 450°C.

Quel que soit le mode d'exécution choisi pour l'étape de décomposition, il est plus rationnel de choisir le temps de séjour et la température de produit fluidisé de manière à obtenir un taux de décomposition au moins égal à 80%.

Un flux de produit fluidisé est extrait de façon continue de la zone de décomposition pour être introduit dans la zone de calcination. Là, les particules, qui se trouvent approximativement dans le domaine des grosseurs de grains comprises entre 20 et 300 $\mu$m, sont rapidement chauffées en raison des températures élevées qui règnent dans le réacteur à lit fluidisé (zone turbulente) et elles se débarrassent très vite du chlorure résiduel, du fait de leur rapport surface/volume élevé, avec dégagement de gaz chlorhydrique. Cela est achevé pour l'essentiel avant même que le produit ne quitte pour la première fois la "zone turbulente" pour être introduit dans la "zone de séjour". Le chauffage rapide est la conséquence de l'apport de chaleur intense dû à l'état turbulent qui règne dans la "zone turbulente"; simultanément, et malgré cela, le produit se trouve ménagé en raison du fait que la combustion est douce, parce qu'elle se produit en deux étapes, et est, au total, pratiquement stoechiomètrique. Les transformations de phase qui se produisent lors de la calcination de l'alumine, transformations qui exigent relativement peu d'énergie, mais des temps de séjour élevés, s'effectuent ensuite économiquement, et d'une manière qui ménage aussi bien le produit que les appareils dans la "zone de séjour". La "zone de séjour" peut être fluidisée à l'aide de vapeur d'eau et/ou d'air.

A partir de la "zone de séjour", on renvoie à la "zone turbulente" exactement autant de produit solide qu'il est nécessaire pour régler la densité de suspension dans la "zone turbulente", et, les cas échéant, éviter des écarts de température notables dans l'ensemble du système "zone turbulente"/"zone de séjour".

On choisit, de préférence, les conditions de fonctionnement dans la "zone turbulente" et le recyclage du produit solide prélevé dans la "zone de séjour", en tenant compte du matériau nouvellement introduit, de manière telle que l'on obtienne dans la zone comprise entre le répartiteur de gaz de l'alimentation en gaz principal et la canalisation d'alimentation en gaz secondaire une densité de suspension moyenne comprise entre 20 et 300 kg/m³ et, dans la zone située au-dessus de la canalisation d'alimentation en gaz secondaire, une densité de suspension moyenne comprise entre 1 et 20 kg/m³.

Avec les conditions mentionnées ci-dessus, il règne, dans la "zone turbulente", une perte de charge comprise entre environ 250 et 900 mm de colonne d'eau.

Si l'on exprime ces conditions de fonctionnement de la "zone turbulente" à l'aide des nombres de FROUDE et d'ARCHIMEDE, on obtient les domaines suivants:

$$0,1 < 3/4 \cdot Fr^2 \frac{\rho_g}{\rho_k - \rho_g} < 10$$

et:

$$0,1 < Ar < 100$$

avec:

$$Ar = \frac{d_k^3 \cdot g(\rho_k - \rho_g)}{\rho_g \cdot v^2}.$$

Ici:

Fr = nombre de FROUDE
Ar = nombre d'ARCHIMEDE
$\rho_g$ = densité du gaz, en kg/m³
g = accélération de la pesanteur, en m/s²
$\rho_k$ = densité d'une particule de produit solide, en kg/m³
$d_k$ = diamètre d'une particule sphérique, en m
$v$ = viscosité cinématique, en m²/s.

La densité de suspension dans la "zone de séjour" est, par contre, nettement plus élevée, en raison de la faible vitesse du gaz de fluidisation qui a pour rôle essentiel de provoquer simplement un brassage du produit solide. Si l'on veut tirer le profit maximal du réacteur de séjour, il faut que la densité de suspension soit supérieure à 500 kg/m³.

Exprimé en termes de nombre de FROUDE et nombre d'ARCHIMEDE, cela se traduit par:

— pour le nombre d'ARCHIMEDE, un domaine identique à celui de la zone turbulente.
— un nombre de FROUDE correspondant à:

$$3/4 \cdot Fr^2 \cdot \frac{\rho_g}{\rho_k - \rho_g} < 5 \cdot 10^{-3}$$

Les dimensions relatives de la "zone turbulente" et de la "zone de séjour" sont déterminées essentiellement par le temps de séjour total moyen indispensable pour fabriquer une qualité de produit donnée. De façon générale, il est avantageux de régler le temps de séjour moyen des produits solides dans la "zone turbulente" à une valeur comprise entre 10 et 30 minutes et celui des produits solides dans la "zone de séjour" à une valeur 2 à 20 fois supérieure.

Dans la définition du temps de séjour moyen dans la "zone turbulente" intervient la quantité de produit solide recyclée à partir de la "zone de séjour", quantité qui peut se calculer à partir de la somme des densités moyennes de suspension dans les deux zones, rapportée à la quantité de produit fabriquée par heure. Le choix des débits du gaz de fluidisation et du gaz secondaire, et en particulier le partage entre les deux flux de gaz, ainsi que le niveau de l'introduction du gaz secondaire, offrent des possibilités de réglage supplémentaires.

Dans une autre forme préférée de l'invention, le gaz secondaire est introduit à un niveau qui se situe entre le 1/10 et le 1/3 de la hauteur totale de la "zone turbulente". Le rapport de la quantité de gaz secondaire introduit dans la "zone turbulente" au débit du gaz de fluidisation introduit dans la même zone est judicieusement réglé à une valeur comprise entre 10:1 et 1:2.

Dans la mesure où, pour régler la densité de suspension nécessaire dans la "zone turbulente", il apparaît nécessaire de limiter à une faible valeur le recyclage de produit solide à partir de la "zone de séjour", tout en souhaitant cependant un temps de séjour total relativement long, il est judicieux de réchauffer le produit dans la "zone de séjour" par injection directe de combustible. Le recyclage ne sert pas à compenser les pertes thermiques dans la "zone de séjour" par exemple par rayonnement, mais uniquement à assurer un réglage plus précis.

Après un temps de séjour suffisamment long, un flux partiel de produits solides est envoyé vers un refroidissement à lit fluidisé, qui s'effectue, d'une manière opportune, dans plusieurs chambres de refroidissement que le produit peut traverser l'une après l'autre; les gaz de fluidisation contenant de l'oxygène, utilisés pour le maintien en état de fonctionnement, sont envoyés, au moins partiellement, dans la "zone turbulente" comme gaz secondaire. Le refroidisseur en lit fluidisé peut être équipé en supplément de serpentins de refroidissement immergés dans le lit fluidisé, dans lesquels sont préchauffés, par exemple le gaz de fluidisation destiné à la "zone turbulente", et, les cas échéant, celui destiné à la "zone de séjour".

Les quantités de gaz envoyées dans les zones turbulente et de séjour sont choisies judicieusement de telle sorte qu'il existe, dans la zone de calcination, une vitesse de gaz comprise entre 3 et 15 m/sec., de préférence entre 4 et 10 m/sec., et dans la "zone de séjour" des vitesses comprises entre 0,1 et 0,3 m/sec., ces vitesses étant rapportées chaque fois au réacteur vide, dans les conditions normales de température et de pression.

Les températures de travail dans la "zone turbulente" et dans la "zone de séjour" peuvent être choisies entre de larges limites et on les détermine essentiellement en fonction de la qualité de produit à obtenir. Elles peuvent se trouver dans un domaine compris entre 650°C. et 1050°C.

Comme gaz de fluidisation et gaz secondaire, qui, dans chaque cas, contiennent de l'oxygène, on peut utiliser de l'air. Si l'on veut obtenir dans les gaz sortants une forte concentration en acide chlorhydrique, il est avantageux d'employer comme gaz de fluidisation et gaz secondaire, des gaz riches en oxygène, de préférence avec des teneurs en oxygène pouvant aller jusqu'à 70% en volume.

L'invention est illustrée, à titre d'exemples et de façon plus détaillée, à l'aide des figures et des exemples de réalisation.

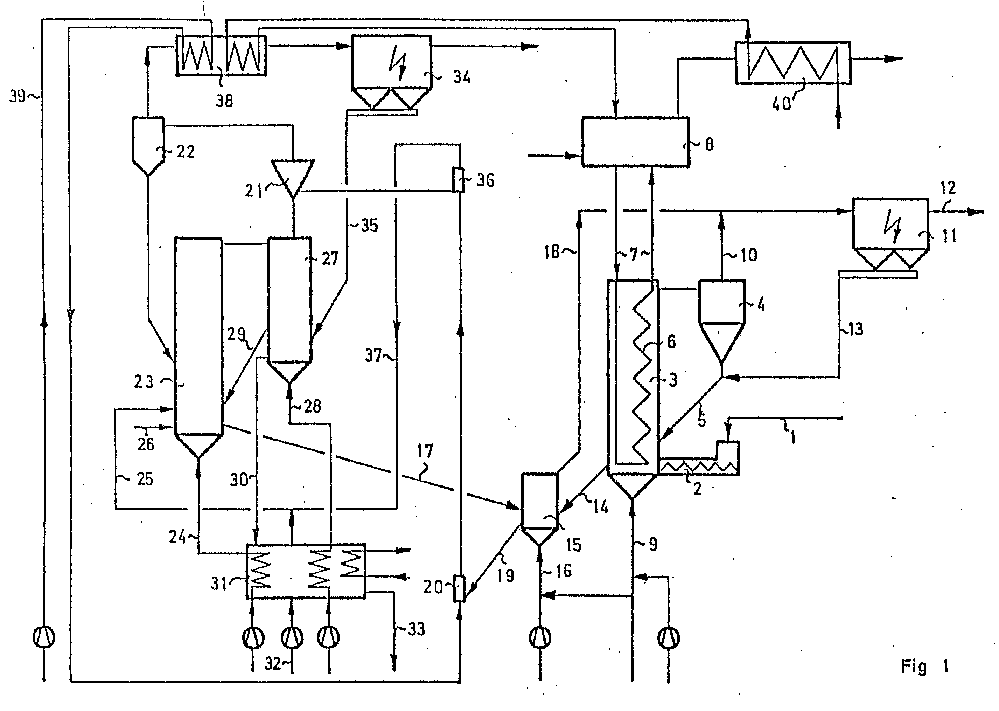

Dans le procédé conforme à la figure 1, la décomposition du chlorure d'aluminium hydraté s'effectue en deux étapes. A cet effet, le chlorure d'aluminium hydraté est chargé, par l'intermédiaire du dispositif de chargement 1 et de la bascule à bande doseuse 2, dans le réacteur à lit fluidisé 3. Le réacteur à lit fluidisé 3 est conçu comme un lit fluidisé circulant, avec séparateur 4 et canalisation de recyclage 5. Son chauffage est réalisé par l'intermédiaire de surfaces chauffantes 6, qui, par l'intermédiaire d'un circuit fermé de fluide caloporteur 7, sont reliées au dispositif de chauffage 8. De la vapeur, amenée par la canalisation 9, sert de gaz de fluidisation. Le gaz sortant du réacteur à lit fluidisé 3 parvient, par l'intermédiaire de la canalisation 10, dans un séparateur électrostatique 11 et finalement dans la canalisation de gaz sortant 12 qui le conduit à l'installation d'absorption du gaz chlorhydrique (non représentée). La poussière arrêtée dans le séparateur électrostatique 11 est renvoyée par l'intermédiaire de la canalisation 13 dans le réacteur à lit fluidisé 3. A partir du lit fluidisé circulant 3, un flux partiel de chlorure d'aluminium partiellement décomposé est envoyé, par l'intermédiaire de la canalisation 14, au second réacteur de décomposition 15, qui fonctionne comme un lit fluidisé classique. Celui-ci est alimenté en vapeur, amenée par la canalisation 16, et en produit calciné, amené par la canalisation 17. Le gaz sortant parvient, par l'intermédiaire de la canalisation 18, dans le séparateur électrostatique 11.

Le produit est extrait du second réacteur de décomposition 15 part l'intermédiaire de la canalisation 19 et introduit dans un dispositif de transport pneumatique 20 qui l'envoie dans un séparateur 36. Le produit solide transporté pneumatiquement est envoyé ensuite au cyclone de Venturi 21 et le flux gazeux est évacué par la canalisation 37. Dans le cyclone de Venturi 21, le chlorure d'aluminium au moins partiellement dissocié est pris en charge par le flux gazeux provenant de l'ensemble "zone turbulente"/"zone de séjour", puis séparé du gaz dans le séparateur 22 et envoyé à la "zone turbulente" 23. Le fonctionnement de la "zone turbulente" 23 est assuré par du gaz de fluidisation amené par la canalisation 24 et du gaz secondaire amené par la canalisation 25. Du combustible, qui est constitué en particulier de mazout ou de gaz de chauffage, est introduit par des lances 26.

Le produit solide, qui est entraîné hors de la "zone turbulente" 23 en raison des conditions de fonctionnement qui règnent dans celle-ci, est séparé du gaz dans la partie supérieure de la "zone de séjour" 27 et parvient dans la partie inférieure, faiblement fluidisée par du gaz provenant de la canalisation 28. Le recyclage contrôlé du produit solide dans la "zone turbulente" 23 s'effectue par l'intermédiaire de la canalisation 29, le recyclage du produit calciné dans le second réacteur de décomposition 15 par l'intermédiaire de la canalisation 17 et le prélèvement de l'alumine définitivement calcinée par l'intermédiaire de la canalisation d'évacuation 30. Ce flux partiel est envoyé au refroidisseur à lit fluidisé 31, lequel est fluidisé par du gaz contenant de l'oxygène amené par la canalisation 32. Le gaz qui quitte le refroidisseur à lit fluidisé 31 par la canalisation 25 est introduit comme gaz secondaire dans la "zone turbulente" 23. L'alumine refroidie est finalement évacuée par la canalisation 33.

Le gaz sortant du séparateur 22 traverse un échangeur de chaleur 38, dans le premier étage duquel est chauffé l'air destiné au transport pneumatique, amené par la canalisation 39, et dans le deuxième étage duquel est chauffé l'air de combustion destiné aux brûleurs du dispositif de chauffage 8. Après passage à travers l'échangeur de chaleur 38, le gaz est libéré de la poussière dans le séparateur électrostatique 34. La poussière recueillie dans le séparateur électrostatique 34 retourne, par l'intermédiaire de la canalisation 35, dans la "zone de séjour" 27.

Les flux de gaz qui sont amenés à la "zone turbulente" 23 et à la "zone de séjour" 27 par l'intermédiaire respectivement des canalisations 25 et 28 sont préalablement chauffés dans le refroidisseur à lit fluidisé 31, en participant au refroidissement du produit calciné chaud. La canalisation 25 apporte, en outre, le gaz provenant du séparateur 36 et évacué par la canalisation 37.

Au dispositif de chauffage 8, se trouve enfin connecté, en aval, du côté gaz, un autre échangeur thermique 40, dans lequel la chaleur des gaz brûlés est transmise à l'air, introduit à la température ambiante, destiné aux brûleurs du dispositif de chauffage 8.

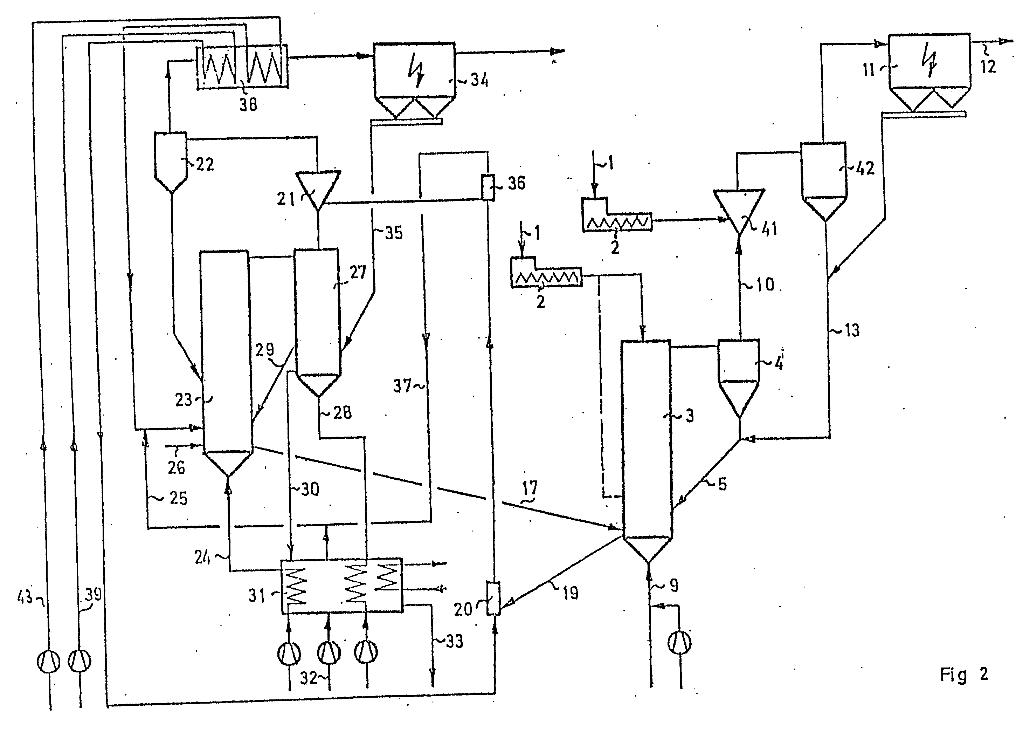

Dans la forme de l'invention conforme à la figure 2, la décomposition du chlorure d'aluminium hydraté s'effectue en une seule étape, qui fonctionne sous la forme d'un lit fluidisé circulant, avec réacteur à lit fluidisé 3, séparateur 4, cyclone de Venturi 41 connecté en aval, côté gaz, et séparateur 42. Le chlorure d'aluminium hydraté est chargé, par l'intermédiaire des dispositifs de chargement 1 et des bascules à bande doseuse 2, en partie dans le réacteur à lit fluidisé 3 et en partie — dans le but de refroidir le gaz sortant — dans le cyclone de Venturi 41. Par l'intermédiaire du séparateur 42 et des canalisation 13 et 5, ce flux partiel parvient ensuite, lui aussi, dans le réacteur à lit fluidisé 3. L'apport de chaleur est réalisé par le produit calciné et recyclé par l'intermédiaire de la canalisation 17. De la vapeur, amenée au réacteur à lit fluidisé 3 par l'intermédiaire de la canalisation 9, sert de gaz de fluidisation. Le gaz sortant de ce réacteur est conduit par l'intermédiaire de la canalisation 10, du cyclone de Venturi 41 et du séparateur 42, dans un séparateur électrostatique 11, où il est libéré de la poussière — laquelle retourne dans le réacteur à lit fluidisé 3 par l'intermédiaire de la canalisation 13 — avant d'être envoyé à l'installation d'absorption du gaz chlorhydrique (non représentée).

A partir du lit fluidisé circulant 3, le chlorure d'aluminium partiellement décomposé est conduit, par l'intermédiaire de la canalisation 19, dans un dispositif de transport pneumatique 20 qui l'envoie dans un séparateur 36.

L'introduction dans la "zone turbulente" 23 et les conditions de fonctionnement concernant la "zone turbulente" 23, la "zone de séjour" 27 et le refroidisseur 31 sont conformes à celles correspondant à la figure 1.

Etant donné que, dans la forme correspondant à la figure 2, le procédé prévoit que la décomposition se fasse uniquement avec du produit calciné recyclé, les surfaces chauffantes, le dispositif de chauffage 8, etc...sont superflus. Au lieu de cela, c'est un flux d'air frais complémentaire — qui est amené par la canalisation 43 et qui sert de gaz secondaire complémentaire pour la "zone turbulente" 23 — qui est chauffé dans l'échangeur de chaleur 38.

Exemple 1 (avec référence à la figure 1)

Par l'intermédiaire du dispositif de chargement 1 et de la balance doseuse à bande transporteuse 2, on a introduit 54 tonnes/h d'$AlCl_3 \cdot 6H_2O$ ayant une humidité d'environ 15% et un diamètre de grains moyen $dp_{50}$ de 150 $\mu$m, dans le réacteur à lit fluidisé 3. Celui-ci avait un diamètre intérieur de 3,0 m et une hauteur de 18 m.

Le réacteur à lit fluidisé 3 fonctionnait avec 3000 mètres cubes normaux/heure de vapeur à 180°C., qui étaient amenés par la canalisation 9. Le chauffage du réacteur à lit fluidisé 3 était réalisé par un mélange fondu de chlorures alcalins, qui, par l'intermédiaire du circuit 7, entrait à 460°C. et sortait à 420°C. Le réchauffage du mélange fondu était réalisé dans le dispositif de chauffage 8 par combustion de 2850 kg/h de fuel lourd possédant un pouvoir calorifique inférieur $H_u = 39.800$ kJ/kg.

Il s'est établi, dans le réacteur à lit fluidisé 3, une température de 200°C. La vitesse du gaz en mouvement turbulent était de 2,0 m/s. En raison de la vitesse élevée du gaz, une forte proportion des produits solides était évacuée en même temps que le gaz à la partie supérieure du réacteur à lit fluidisé 3. Après séparation dans le séparateur 4 connecté en aval, le produit solide retournait par l'intermédiaire de la canalisation 5 dans le réacteur à lit fluidisé 3. Par suite du recyclage du produit solide dans le réacteur à lit fluidisé 3 et des conditions de fonctionnement choisies pour ce réacteur, il s'est établi, dans le réacteur à lit fluidisé 3, une densité de suspension moyenne d'environ 150 kg/m³ et une perte de charge de 2700 mm de colonne d'eau. Le temps de séjour moyen était de 1,7 heure. Sur la base des conditions mentionnées précédemment, environ 80% du chlorure d'aluminium étaient dissociés.

Par l'intermédiaire de la canalisation 14, on a transféré 22,4 tonnes/heure de produit solide dans le réacteur de décomposition 15. Celui-ci possédait un diamètre intérieur de 4,6 m. La hauteur du lit fluidisé était de 5,0 m. Par l'intermédiaire de la canalisation 16, on introduisait 1000 mètres cubes normaux/heure de vapeur à 180°C. Par suite du recyclage du produit calciné par l'intermédiaire de la canalisation 17, à raison d'une quantité de 46 tonnes/heure et à une température de 950°C., il s'est établi dans le réacteur de décomposition 15 une température de 500°C. La vitesse du gaz en mouvement turbulent était de 0,5 m/s. La densité de suspension moyenne était de 400 kg/m³, le temps de séjour moyen était de 35 mn. 12.050 mètres cubes normaux/heure de gaz sortant à 500°C. étaient évacués par la canalisation 18 et, réunis aux 30.000 mètres cubes normaux/heure du gaz sortant chaud, à 200°C., évacués par la canalisation 10, ces gaz étaient envoyés au séparateur électrostatique 11 pour y être dépoussiérés. La concentration en gaz chlorhydrique était de 34,6% en volume et la température du gaz de 290°C.

Du réacteur de décomposition 15, on a extrait 58 tonnes/heure de produit solide. Rapporté au chlorure d'aluminium hydraté chargé frais, le taux de décomposition avait atteint 99,6%. Le produit solide était envoyé pneumatiquement dans le séparateur 36 à l'aide du dispositif 20, avec utilisation de 2900 mètres cubes normaux/heure d'air préchauffé à 500°C. dans l'échangeur de chaleur 38. Le produit solide parvenait dans le cyclone de Venturi 21, était pris en charge par le gaz sortant de l'ensemble des "zone turbulente" 23 et "zone de séjour" 27, gaz dont le débit s'élevait à 17.023 mètres cubes normaux/heure, puis envoyé dans le séparateur 22. Le gaz sortant qui, avant de sortir de l'ensemble "zone turbulente" 23 "zone de séjour" 27, possédait une température de 950°C., était refroidi à 700°C., par contact avec les produits solides, puis conduit à l'échangeur de chaleur 38.

Dans la "zone turbulente" 23 et la "zone de séjour" 27, se produisait la décomposition du chlorure d'aluminium résiduel, ainsi que la calcination en alumine. Dans la "zone turbulente" 23, la hauteur libre du réacteur était de 14 m. et le diamètre intérieur de 2,2 m; dans la partie inférieure cylindrique de la "zone de séjour", le diamètre intérieur était de 3,5 m et la hauteur de 3,4 m (valeur se rapportant au lit fluidisé).

Pour fluidiser la "zone turbulente" 23, on utilisait de l'air introduit par l'intermédiaire de la canalisation 24 et du répartiteur de gaz, en un débit de 4225 mètres cubes normaux/heure, air qui avait été préchauffé à 550°C. dans le refroidisseur en lit fluidisé 31 par échange de chaleur indirect. 8500 mètres cubes normaux/heure d'air, dont 2900 mètres cubes normaux/heure à 500°C. amenés par la canalisation 37, et 5600 mètres cubes normaux/heure à 600°C. provenant du refroidisseur à lit fluidisé 31, étaient conduits à la "zone turbulente" 23 par la canalisation 25 et introduits comme gaz secondaire à 2,5 m au-dessus du répartiteur de gaz. Le rapport du gaz de fluidisation au gaz secondaire était, par conséquent, de 1:2,0. Dans la région comprise entre le répartiteur de gaz et la canalisation de gaz secondaire 25, 1160 kg/h de fuel lourd (de pouvoir calorifique inférieur $H_u$=39.800 kJ/kg) étaient injectés à l'aide des lances 26. Dans la région comprise entre le répartiteur de gaz et la canalisation de gaz secondaire 25, la combustion était incomplète. La combustion complète se produisait au-dessus de l'arrivée du gaz secondaire par la canalisation 25.

Les produits solides entraînés hors de la "zone turbulente" 23 étaient séparés du gaz dans la partie supérieure de la "zone de séjour" 27, puis ils parvenaient dans la partie inférieure de cette zone et y formaient un lit fluidisé dense.

La "zone de séjour" 27 était fluidisée à l'aide de 1100 mètres cubes normaux/heure d'air, préchauffés à 500°C. dans le refroidisseur en lit fluidisé 31.

Par suite de la circulation des produits solides dans la "zone turbulente" 23, ainsi qu'en raison du recyclage des produits solides provenant de la "zone de séjour" 27 par l'intermédiaire de la canalisation 29, il s'est établi, dans l'ensemble du système de circulation, une température uniforme de 950°C.

Le partage du temps de séjour total de l'alumine, qui était d'environ 1,96 heure, entre la "zone turbulente" 23 et la "zone de séjour" 27 correspondait approximativement au rapport 1:11 (10 minutes de "zone turbulente" 23, 1,8 heure de "zone de séjour" 27). La perte de pression dans la "zone turbulente" 23 était réglée à environ 430 mm de colonne d'eau. La densité de suspension moyenne dans la région comprise entre le répartiteur de gaz et la canalisation de gaz secondaire 25 était de 150 kg/m³ et la densité de suspension moyenne au-dessus de la canalisation de gaz secondaire 25 était de 5 kg/m³. Dans la "zone de séjour" 27, il régnait dans la région remplie de produit solide une densité de suspension d'environ 550 kg/m³.

La production, d'un niveau de 10 tonnes d'alumine/heure, était transférée de la "zone de séjour" 27 au refroidisseur en lit fluidisé 31 par l'intermédiaire de la canalisation 30. Dans le refroidisseur en lit fluidisé, qui était fluidisé à l'aide de 5600 mètres cubes normaux/heure d'air et dont les registres de refroidissement étaient parcourus par, respectivement, 4225 mètres cubes normaux/heure et 1100 mètres cubes normaux/heure, l'alumine était refroidie à une température de 100°C., avec le secours d'un refroidissement complémentaire à l'eau. Les flux d'air préchauffés à, respectivement, 550 et 500°C. par chauffage indirect étaient envoyés aux destinations décrites plus haut.

Le gaz sortant du séparateur électrostatique 34 à raison de 17.023 mètres cubes normaux/heure possédait une température de 300°C. et une teneur en HCl de 0,25% en volume.

L'air de combustion nécessaire au fonctionnement du dispositif de chauffage 8, dont le débit était de 34.400 mètres cubes normaux/heure, était chauffé à 250°C. dans l'échangeur de chaleur 40 et à 500°C. dans l'échangeur de chaleur 38 .

Exemple 2 (avec référence à la figure 2)

Par l'intermédiaire des dispositifs de chargement 1 et des balances doseuses à bande transporteuse 2, on a chargé 54 tonnes/heure d'$AlCl_3.6H_2O$ ayant une humidité d'environ 15% et un diamètre de grains moyen de $dp_{50}$ de 150 $\mu$m, dans le réacteur à lit fluidisé. L'introduction s'est effectuée selon le rapport 40:1, dans le réacteur à lit fluidisé 3 et dans le cyclone de Venturi 41. Le réacteur à lit fluidisé 3 avait un diamètre intérieur de 5,5 m et une hauteur de 18 m.

Le réacteur à lit fluidisé 3 fonctionnait avec 3000 mètres cubes normaux/heure de vapeur à 180°C., qui étaient amenés par la canalisation 9. Le chauffage du réacteur à lit fluidisé 3 était réalisé par introduction de 180 tonnes/heure de produit calciné à 950°C. par la canalisation 17.

Il s'est établi, dans le réacteur à lit fluidisé 3, une température de 400°C. La vitesse du gaz en mouvement turbulent était de 4,6 m/s. En raison de la vitesse élevée du gaz, une forte proportion des produits solides était évacuée en même temps que le gaz à la partie supérieure du réacteur à lit fluidisé 3. Après séparation dans le séparateur 4 connecté en aval, le produit solide retournait par l'intermédiaire de la canalisation 5 dans le réacteur à lit fluidisé 3. Par suite du recyclage du produit solide dans le réacteur à lit fluidisé 3 et des conditions de fonctionnement choisies pour ce réacteur, il s'est établi dans le réacteur à lit fluidisé 3 une densité de suspension moyenne d'environ 100 kg/m³ et une perte de charge de 1800 mm de colonne d'eau. Le temps de séjour moyen était de 0,5 heure. Sur la base des conditions mentionnées précédemment, environ 98% du chlorure d'aluminium étaient décomposés.

38.400 mètres cubes normaux/heure de gaz sortant du séparateur 42 étaient envoyés au séparateur électrostatique 11 pour y être dépoussiérés. La concentration en gaz chlorhydrique était de 37%, la température du gaz de 250°C.

On a extrait du réacteur de decomposition 194 tonnes/heure de produit solide, que l'on a envoyées pneumatiquement dans le séparateur 36, à l'aide du dispositif 20, en utilisant 9700 mètres cubes normaux/heure d'air préchauffé à 400°C. dans l'échangeur de chaleur 38. Le produit solide parvenait dans le cyclone de Venturi 21, était pris en charge par le gaz sortant de l'ensemble "zone turbulente" 23/"zone de séjour" 27, gaz dont le débit s'élevait à 45.000 mètres cubes normaux/heure, puis envoyé dans le séparateur 22. Le gaz qui possédait une température de 950°C. avant de sortir de l'ensemble "zone turbulente" 23/"zone de séjour" 27, était refroidi à 640°C., par contact avec les produits solides, puis conduit à l'échangeur de chaleur 38.

Dans la "zone turbulente" 23 et la "zone de séjour" 27, se produisait la décomposition du chlorure d'aluminium résiduel, ainsi que la calcination en alumine. Dans la "zone turbulente" 23, la hauteur libre du réacteur était de 16 m. et le diamètre intérieur de 3,5 m; dans la partie inférieure cylindrique de la "zone de séjour", le diamètre intérieur était de 3,5 m. et la hauteur de 3,4 m. (valeur se rapportant au lit fluidisé).

Pour fluidiser la "zone turbulente" 23, on utilisait de l'air introduit par l'intermédiaire de la canalisation 24 et du répartiteur de gaz, selon un débit de 5000 mètres cubes normaux/heure, air qui avait été préchauffé à 550°C. dans le refroidisseur en lit fluidisé 31, par chauffage indirect. 36.230 mètres cubes normaux/heure d'air, dont 9700 mètres cubes normaux/heure à 400°C. amenés par la canalisation 37, 5600 mètres cubes normaux/heure à 600°C. provenant du refroidisseur en lit fluidisé 31 et 20.930 mètres cubes normaux/heure à 500°C. amenés par l'intermédiaire de la canalisation 43 et de l'échangeur de chaleur 38, étaient conduits à la "zone turbulente" 23 par la canalisation 25 et introduits comme gaz secondaire à 4,0 m au-dessus du répartiteur de gaz. Le rapport du gaz de fluidisation au gaz secondaire était, par conséquent, de 1:7,2. Dans la région comprise entre le répartiteur de gaz et la canalisation de gaz secondaire 25, 3570 kg/h de fuel lourd (de pouvoir calorifique inférieur $H_u$=39.800 kJ/kg) étaient injectés à l'aide des lances 26. Dans le région comprise entre le répartiteur de gaz et la canalisation de gaz secondaire 25, la combustion était incomplète. La combustion complète se produisait au-dessus de l'arrivée du gaz secondaire par la canalisation 25.

Les produits solides entraînés hors de la "zone turbulente" 23 étaient séparés du gaz dans la partie supérieure de la "zone de séjour" 27, puis ils parvenaient dans la partie inférieure de cette zone et y formaient un lit fluidisé dense.

- La "zone de séjour" 27 était fluidisée à l'aide de 1100 mètres cubes normaux/heure d'air qui avaient été préchauffés à 400°C. dans le refroidisseur à lit fluidisé 31.

Par suite de la circulation des produits solides dans la "zone turbulente" 23, ainsi qu'en raison du recyclage des produits solides provenant de la "zone de séjour" 27 par l'intermédiaire de la canalisation 29, il s'est établi, dans l'ensemble du système de circulation, une température uniforme de 950°C.

Le partage du temps de séjour total de l'alumine qui était d'environ 2,26 heures, entre la "zone turbulente" 23 et la "zone de séjour" 27, correspondait approximativement au rapport 1:3,8 (38 minutes de "zone turbulente" 23, 1,8 heure de "zone de séjour" 27). La perte de charge dans la "zone turbulente" 23 était réglée à environ 660 mm de colonne d'eau. La densité de suspension moyenne dans la région comprise entre le répartiteur de gaz et la canalisation de gaz secondaire 25 était de 150 kg/m$^3$ et la densité de suspension moyenne au-dessus de la canalisation de gaz secondaire 25 était de 5 kg/m$^3$. Dans la "zone de séjour" 27, il régnait dans la région remplie de produit solide une densité de suspension d'environ 550 kg/m$^3$.

La production, d'un niveau de 10 tonnes/heure d'alumine, était transférée de la "zone de séjour" 27 au refroidisseur à lit fluidisé 31, par l'intermédiaire de la canalisation 30. Dans le refroidisseur à lit fluidisé, qui était fluidisé à l'aide de 5600 mètres cubes normaux/heure d'air et dont les registres de refroidissement étaient parcourus par, respectivement, 5000 mètres cubes normaux/heure et 1100 mètres cubes normaux/heure, l'alumine était refroidie à une température de 100°C. à l'aide d'un refroidissement complémentaire à l'eau. Les flux d'air préchauffés à, respectivement, 550°C. et 400°C. par chauffage indirect étaient envoyés aux destinations décrites plus haut.

Le gaz sortant du séparateur électrostatique 34 à raison de 45.000 mètres cubes normaux/heure possédait une température de 350°C. et une teneur en HCl de 0,5% en volume.

**Revendications**

1. Procédé de décomposition thermique de chlorure d'aluminium hexahydraté en alumine, en utilisant un état fluidisé à lit fluidisé fortement expansé d'un réacteur appelé "zone turbulente" auquel sont associés un gradient de concentration en matière solide de bas en haut du lit fluidisé et une évacuation des produits solides en même temps que les gaz à la partie supérieure de la "zone turbulente", procédé dans lequel

— le chlorure d'aluminium hydraté est au moins partiellement décomposé par mise en contact avec des gaz chauds avant d'être introduit dans la "zone turbulente", puis est conduit dans ladite "zone turbulente",

— les produits solides évacués avec les gaz à la partie supérieure de la "zone turbulente" sont séparés et introduits dans une "zone de séjour" fluidisée avec un vitesse de gaz inférieure à celle des gaz de la "zone turbulente", "zone de séjour" à partir de laquelle un flux partiel de produits solides est renvoyé de façon contrôlé dans la "zone turbulente" et où un autre flux partiel est envoyé, au bout d'un temps de séjour compris entre 2 fois et 20 fois le temps de séjour à l'intérieur de la "zone turbulente" vers un refroidissement en lit fluidisé qui fonctionne avec un gaz contenant de l'oxygène comme gaz de fluidisation,

— au moins une partie de gaz de fluidisation chauffé qui sort du refroidissement en lit fluidisé est introduit comme gaz secondaire dans la "zone turbulente" au-dessus de l'alimentation en gaz principal de fluidisation,

— le chauffage de la "zone turbulente" est réalisé par apport de combustible dans la région comprise entre l'alimentation en gaz principal de fluidisation et l'alimentation en gaz secondaire,

caractérisé en ce que, avant d'être introduit dans la "zone turbulente" AlCl$_3$,6H$_2$O humide est décomposé au moins à 70%, en une seule étape, par mise en contact, dans un lit fluidisé classique ou dans un lit fluidisé expansé à recirculation, simultanément avec des gaz à l'état turbulent et avec le produit calciné chaud provenant directement de la "zone turbulente".

2. Procédé de décomposition thermique de chlorure d'aluminium hexahydraté en alumine, en utilisant un état fluidisé à lit fluidisé fortement expansé d'un réacteur appelé "zone turbulente" auquel sont associés un gradient de concentration en matière solide de bas en haut du lit fluidisé, et une évacuation des produits solides en même temps que les gaz à la partie supérieure de la "zone turbulente", procédé dans lequel:

— le chlorure d'aluminium hydraté est au moins partiellement décomposé par mise en contact avec des gaz chauds avant d'être introduit dans la "zone turbulente", puis est conduit à la "zone turbulente",

— les produits solides évacués avec les gaz à la partie supérieure de la "zone turbulente" sont séparés et introduits dans une "zone de séjour" fluidisée avec une vitesse de gaz inférieure à celle des gaz de la "zone turbulente", "zone de séjour" à partir de laquelle un flux partiel de produits solides est renvoyé dans la "zone turbulente", et où un autre flux partiel est envoyé, au bout d'un temps de séjour compris entre 2 et 20 fois le temps de séjour à l'intérieur de la "zone turbulente", vers un refroidissement en lit fluidisé qui fonctionne avec un gaz contenant de l'oxygène comme gaz de fluidisation,

— au moins une partie du gaz de fluidisation chauffé qui sort du refroidissement en lit fluidisé est introduit comme gaz secondaire dans la "zone turbulente" au-dessus de l'alimentation en gaz principal de fluidisation,

— le chauffage de la "zone turbulente" est réalisé par apport de combustible dans la région comprise entre l'alimentation en gaz principal de fluidisation et l'alimentation en gaz secondaire,

caractérisé en ce que, avant d'être introduit dans la "zone turbulente" AlCl$_3$,6H$_2$O humide est décomposé au moins à 70%, en deux étapes, par mise en contact dans la première étape avec des gaz à l'état turbulent dans un lit fluidisé à recirculation, l'apport de chaleur se faisant par des surfaces chauffantes, puis, dans la deuxième étape, par mise en contact avec des gaz dans un lit fluidisé classique avec apport de chaleur par l'intermédiaire du produit calciné provenant directement de la "zone turbulente".

3. Procédé selon la revendication 1 ou la revendication 2, caractérisé en ce que, quand la décomposition du chlorure d'aluminium hydraté se fait dans un lit fluidisé classique, on règle de préférence la densité moyenne de suspension de matière solide dans ledit lit à valeur comprise entre 300 et 600 kg/m$^3$ et la vitesse du gaz en mouvement turbulent à une valeur inférieure à 0,8 m/s.

4. Procédé selon la revendication 1 ou la revendication 2, caractérisé en ce que, quand la décomposition du chlorure d'aluminium hydraté se fait dans un lit fluidisé expansé à recirculation, on règle de préférence la densité moyenne de suspension de matière solide dans ledit lit à une valeur comprise entre 40 et 250 kg/m$^3$, et la vitesse du gaz en mouvement turbulent à une valeur comprise entre 1,5 et 5 m/s.

5. Procédé selon l'une des revendications 1 et 2, caractérisé en ce qu'on dissocie le chlorure d'aluminium hydraté dans un lit fluidisé fonctionnant avec injection de vapeur d'eau.

6. Procédé selon la revendication 1, caractérisé en ce qu'on règle la température de décomposition en une seule étape du lit fluidisé à recirculation entre 200°C et 450°C.

7. Procédé selon la revendication 2, caractérisé en ce que, quand on effectue la décomposition en deux étapes, on règle la température de décomposition à une valeur comprise entre 150 et 300°C. dans la première étape de décomposition et, dans la deuxième étape de décomposition, à une température d'au moins 500°C.

8. Procédé selon les revendications 1 à 7, caractérisé en ce qu'on règle à l'intérieur de la "zone turbulente", dans la région comprise entre le répartiteur de gaz de l'alimentation en gaz principal et la canalisation d'alimentation en gaz secondaire, une densité moyenne de suspension comprise entre 20 et 300 kg/m$^3$ et, dans la région située au-dessus de la canalisation d'alimentation en gaz secondaire, une densité moyenne de suspension comprise entre 1 et 20 kg/m$^3$.

9. Procédé selon les revendications 1 à 8, caractérisé en ce qu'on règle la densité moyenne de suspension à l'intérieur de la "zone de séjour" à une valeur supérieure à 500 kg/m$^3$.

10. Procédé selon les revendications 1 à 9, caractérisé en ce qu'on règle le temps de séjour moyen des produits solides à l'intérieur de la "zone turbulente" à une valeur comprise entre 10 et 30 minutes.

11. Procédé selon les revendications 1 à 10, caractérisé en ce qu'on règle le rapport du débit du gaz secondaire introduit dans la "zone turbulente" au débit du gaz de fluidisation introduit dans la même zone à une valeur comprise entre 10:1 et 1:2.

12. Procédé selon les revendications 1 à 11, caractérisé en ce que les températures de travail des "zones turbulente et de séjour" sont comprises entre 650°C et 1050°C.

**Patentansprüche**

1. Verfahren zur thermischen Zersetzung von Aluminium-chlorid-Hexahydrat zu Aluminium unter Verwendung eines verwirbelten Zustands mit stark erweiterten Wirbelbett oder "Turbulenzzone" eines Reaktors, mit dem ein von unten nach oben verlaufender Konzentrationsgradient von festem Material des Wirbelbetts und eine Entleerung der festen Produkte gleichzeitig mit den Gasen am Oberteil der "Turbulenzzone" verbunden sind, wobei

— das Aluminiumchlorid-Hydrat vor der Einführung in die "Turbulenzzone" durch Berührung mit heißen Gasen wenigstens teilweise zerlegt wird, wonach es in die "Turbulenzzone" eingeführt wird,

— die mit den heißen Gasen am Oberteil der "Turbulenzzone" entleerten festen Produkte abgetrennt und in eine verwirbelte "Verweilzone" mit einer Geschwindigkeit eingeführt werden, die kleiner als diejenige der Gase der "Turbulenzzone" ist, wobei ausgehend von der "Verweilzone" ein Teilfluß an festen Produkten kontrolliert in die "Turbulenzzone" eingeführt wird und von wo aus am Ende einer Verweildauer mit dem 2- bis 20-fachen der Verweildauer innerhalb der "Turbulenzzone" ein weiterer Teilfluß zu einer Kühlung in Form eines Wirbelbetts geschickt wird, das mit einem Sauerstoff als Wirbelgas enthaltenden Gas arbeitet,

— wenigstens ein Teil des erhitzten Wirbelgases, das aus der Kühlung in Form eines Wirbelbetts heraustritt, oberhalb der Speisung mit Primärwirbelgas als Sekundär-

gas in die "Turbulenzzone" eingeführt wird,
— die Erhitzung der "Turbulenzzone" durch Zufuhr von Brennstoff in den Bereich zwischen der Speisung mit Primärwirbelgas und der Speisung mit Sekundärgas erfolgt,

dadurch gekennzeichnet,
daß vor der Einführung in die "Turbulenzzone" feuchtes $AlCl_3$, $6H_2O$ zu wenigstens 70% in einer einzigen Stufe dadurch zersetzt wird, daß es in einem herkömmlichen Wirbelbett oder in einem erweiterten Wirbelbett mit Rezirkulation gleichzeitig in Berührung gebracht wird mit Gasen im turbulenten Zustand und mit dem unmittelbar von der "Turbulenzzone" stammenden kalzinierten heißen Produkt.

2. Verfahren zur thermischen Zersetzung von Aluminium-chlorid-Hexahydrat zu Aluminium unter Verwendung eines verwirbelten Zustands mit stark erweiterten Wirbelbett oder "Turbelenzzone" eines Reaktors, mit dem ein von oben nach unten verlaufender Konzentrationsgradient von festem Material des Wirbelbetts und eine Entleerung der festen Produkte gleichzeitig mit den Gasen am Oberteil der "Turbulenzzone" verbunden sind, wobei

— das Aluminiumchlorid-Hydrat vor der Einführung in die "Turbulenzzone" durch Berührung mit heißen Gasen wenigstens teilweise zerlegt wird, wonach es in die "Turbulenzzone" eingeführt wird,
— die mit den Gasen am Oberteil der "Turbulenzzone" entleerten festen Produkte abgetrennt, um in eine verwirbelte "Verweilzone" mit einer Geschwindigkeit eingeführt werden, die kleiner als diejenige der Gase der "Turbulenzzone" ist, wobei ausgehend von der "Verweilzone" ein Teilfluß an festen Produkten kontrolliert in die "Turbulenzzone" eingeführt wird und von wo aus am Ende einer Verweildauer mit dem 2- bis 20- fachen der Verweildauer innerhalb der "Turbulenzzone" ein weiterer Teilfluß zu einer Kühlung in Form eines Wirbelbetts geschickt wird, das mit einem Sauerstoff als Wirbelgas enthaltenden Gas arbeitet,
— die Erhitzung der "Turbulenzzone" durch Zufuhr von Brennstoff in den Bereich zwischen der Speisung mit Primärwirbelgas und der Speisung mit Sekundärgas erfolgt,

dadurch gekennzeichnet,
daß vor der Einführung in die "Turbulenzzone" feuchtes $AlCl_3$, $6H_2O$ zu wenigstens 70% in zwei Stufen dadurch zersetzt wird, daß es in der ersten Stufe in einem Wirbelbett mit Rezirkulation mit Gasen im Wirbelzustand in Berührung gebracht wird, wobei die Wärmezufuhr durch Heizflächen erfolgt, und daß es dann in der zweiten Stufe mit Gasen in einem herkömmlichen Wirbelbett in Berührung gebracht wird, wobei die Wärmezufuhr durch das unmittelbar von der "Turbulenzzone" stammende kalzinierte Produkt erfolgt.

3. Verfahren nach Anspruch 1 oder 2, dadurch gekennzeichnet, daß während der Zersetzung des Aluminium-chlorid-Hydrats in einem herkömmlichen Wirbelbett die mittlere Suspensionsdichte an festem Material im Wirbelbett vorzugsweise auf einen Wert von 300 bis 600 $kg/m^3$ und die Geschwindigkeit des sich turbulent bewegenden Gases auf einen Wert von unter 0,8 m/sec eingeregelt werden.

4. Verfahren nach Anspruch 1 oder 2, dadurch gekennzeichnet, daß während der Zersetzung des Aluminium-chlorid-Hydrats in einem erweiterten Wirbelbett mit Rezirkulation die mittlere Suspensionsdichte an festem Material im Wirbelbett vorzugsweise auf einen Wert von 40 bis 250 $kg/m^3$ und die Geschwindigkeit des in turbulenter Bewegung befindlichen Gases auf einen Wert von 1,5 bis 5 m/sec eingeregelt werden.

5. Verfahren nach einem der Ansprüche 1 und 2, gekennzeichnet durch Dissoziieren des Aluminiumchlorid-Hydrats mit einem mit Wasserdampfeinspritzung arbeitenden Wirbelbett.

6. Verfahren nach Anspruch 1, gekennzeichnet durch Einregeln der Temperatur für in einer einzigen Stufe des Wirbelbetts mit Rezirkulation erfolgenden Zersetzung auf 200 bis 450°C.

7. Verfahren nach Anspruch 2, dadurch gekennzeichnet, daß bei der Ausführung der Zersetzung in zwei Stufen die Zersetzungstemperatur in der ersten Zersetzungsstufe auf 150 bis 300°C und in der zweiten Stufe auf wenigstens 500°C eingeregelt werden.

8. Verfahren nach Anspruch 1 bis 7, dadurch gekennzeichnet, daß innerhalb der "Turbulenzzone" ein geregelt wird: eine mittlere Suspensionsdichte von 20 bis 300 $kg/m^3$ im Bereich zwischen dem Gasverteiler für die Speisung mit Primärgas und der Rohrleitung für die Speisung mit Sekundärgas, und eine mittlere Suspensionsdichte von 1 bis 20 $kg/m^3$ in Bereich für die Speisung mit Sekundärgas.

9. Verfahren nach Anspruch 1 bis 8, dadurch gekennzeichnet, daß die mittlere Suspensionsdichte innerhalb der "Verweilzone" auf über 500 $kg/m^3$ eingeregelt wird.

10. Verfahren nach Anspruch 1 bis 9, dadurch gekennzeichnet, daß die mittlere Verweildauer der festen Produkte innerhalb der "Turbulenzzone" 10 bis 30 min beträgt.

11. Verfahren nach Anspruch 1 bis 10, dadurch gekennzeichnet, daß das Verhältnis der Durchsatzmenge des in die "Turbulenzzone" eingeführten Sekundärgases zur Durchsatzmenge des in dieselbe Zone eingeführten Wirbelgases 10:1 bis 1:2 beträgt.

12. Verfahren nach Anspruch 1 bis 11, dadurch gekennzeichnet, daß die Arbeitstemperaturen der "Turbulenzzone" und der "Verweilzone" 650 bis 1050°C betragen.

**Claims**

1. A process for the thermal decomposition of aluminium chloride hexahydrate into alumina using a fluidized state with a markedly expanded fluidized bed of a reactor known as a "turbulent zone" with which there are associated a gradient of concentration in solid material from the bottom to the top of the fluidized bed and a removal of the solid products at the same time as the gases at the top of the "turbulent zone", in which process

— the hydrated aluminium chloride is at least partially decomposed by contact with hot gases before being introduced into the "turbulent zone" and is then conveyed into the said "turbulent zone";
— the solid products removed with the gases at the top of the "turbulent zone" are separated and introduced into a "residence zone" fluidized at a gas velocity below that of the gases in the "turbulent zone", from which "residence zone" a partial flow of solid products is returned in a controlled manner into the "turbulent zone" and in which another partial flow is transported, after a residence time of between 2 times and 20 times the residence time inside the "turbulent zone", towards a fluidized bed cooling treatment which operates with a gas containing oxygen as fluidization gas;
— at least part of the heated fluidization gas leaving the fluidized bed cooling treatment is introduced as secondary gas into the "turbulent zone" above the main fluidization gas feed;
— the "turbulent zone" is heated by the supply of fuel in the region between the main fluidization gas feed and the secondary gas feed, characterised in that, before being introduced into the "turbulent zone", moist $AlCl_3.6H_2O$ is decomposed at least to an extent of 70% in a single stage by contact, in a conventional fluidized bed or in a recirculation-type expanded fluidized bed, simultaneously with gases in the turbulent state and with the hot calcined product emanating directly from the "turbulent zone".

2. A process for the thermal decomposition of aluminium chloride hexahydrate into alumina using a fluidized state with a markedly expanded fluidized bed of a reactor known as a "turbulent zone" with which there are associated a gradient of concentration in solid material from the bottom to the top of the fluidized bed and a removal of the solid products at the same time as the gases at the top of the "turbulent zone", in which process:

— the hydrated aluminium chloride is at least partially decomposed by contact with hot gases before being introduced into the "turbulent zone", and is then conveyed into the "turbulent zone";
— the solid products removed with the gases at the top of the "turbulent zone" are separated and introduced into a "residence zone" fluidized at a gas velocity below that of the gases in the "turbulent zone", from which "residence zone" a partial flow of solid products is returned into the "turbulent zone" and in which another partial flow is transported, after a residence time of between 2 and 20 times the residence time inside the "turbulent zone", towards a fluidized bed cooling treatment which operates with a gas containing oxygen as fluidization gas;
— at least part of the heated fluidization gas leaving the fluidized bed cooling treatment is introduced as secondary gas into the "turbulent zone" above the main fluidization gas feed;
— the "turbulent zone" is heated by the supply of fuel in the region between the main fluidization gas feed and the secondary gas feed, characterised in that, before being introduced into the "turbulent zone", moist $AlCl_3.6H_2O$ is decomposed to an extent of at least 70%, in two stages, by contact in the first stage with gases in the turbulent state in a recirculation-type fluidized bed, heat being supplied via heating surfaces, then in the second stage by contact with gases in a conventional fluidized bed with supply of heat via the calcined product emanating directly from the "turbulent zone".

3. A process according to Claim 1 or Claim 2, characterised in that, when the hydrated aluminium chloride is decomposed in a conventional fluidized bed, the mean density of suspension of solid material in the said bed is preferably adjusted to a value of between 300 and 600 kg/m³ and the velocity of the gas in turbulent movement to a value below 0.8 m/s.

4. A process according to Claim 1 or Claim 2, characterised in that, when the hydrated aluminium chloride is decomposed in a recirculation-type expanded fluidized bed, the mean density of suspension of solid material in the said bed is preferably adjusted to a value between 40 and 250 kg/m³, and the velocity of the gas in turbulent movement to a value between 1.5 and 5 m/s.

5. A process according to one of Claims 1 and 2, characterised in that the hydrated aluminium chloride is dissociated in a fluidized bed operating by injection of water vapour.

6. A process according to Claim 1, characterised in that the decomposition temperature is adjusted in a single stage of the recirculation-type fluidized bed to between 200°C and 450°C.

7. A process according to Claim 2, characterised in that, when decomposition is effected in two stages, the decomposition temperature is adjusted to a value between 150 and 300°C in the first decomposition stage, and to a temperature of at least 500°C in the second decomposition stage.

8. A process according to Claims 1 to 7, characterised in that a mean suspension density of between 20 and 300 kg/m³ is adjusted inside the "turbulent zone" in the region between the gas distributor for the main gas feed and the pipe for the secondary gas feed, and a mean suspension density of between 1 and 20 kg/m³ is adjusted in the region located above the secondary gas feed pipe.

9. A process according to Claims 1 to 8, characterised in that the mean suspension density is adjusted to a value above 500 kg/m³ inside the "residence zone".

10. A process according to Claims 1 to 9, characterised in that the mean residence time of the solid products inside the "turbulent zone" is adjusted to a value of between 10 and 30 minutes.

11. A process according to Claims 1 to 10, characterised in that the ratio of the flow of secondary gas introduced into the "turbulent zone" to the flow of fluidization gas introduced into the same zone is adjusted to a value of between 10:1 to 1:2.

12. A process according to Claims 1 to 11, characterised in that the operating temperatures in the "turbulent and residence zones" are between 650°C and 1050°C.

Fig 1

Fig 2

0003713